# EUROPÄISCHE PATENTSCHRIFT

(11) **EP 0 465 614 B1**
(45) Veröffentlichungstag und Bekanntmachung des Hinweises auf die Patenterteilung: **03.09.1997**
(21) Anmeldenummer: 91901700.4
(22) Anmeldetag: 17.01.1991
(51) Int. Cl.: F02D 41/36, F02D 41/14

(54) **VERFAHREN ZUR ARBEITSTAKTERKENNUNG BEI EINEM VIERTAKTMOTOR**
PROCESS FOR DETERMINING THE WORKING STROKE OF A FOUR-STROKE ENGINE
PROCEDE POUR LA DETECTION DU TEMPS MOTEUR DANS LE CAS D'UN MOTEUR A QUATRE TEMPS

(30) Priorität: 26.01.1990 DE 4002228
(43) Veröffentlichungstag der Anmeldung: 15.01.1992
(73) Patentinhaber: ROBERT BOSCH GMBH, 70442 Stuttgart (DE)
(72) Erfinder: ENTENMANN, Robert, D-7141 Benningen (DE); ROHDE, Siegfried, D-7141 Oberriexingen (DE); STENGEL, Bernhard, D-7146 Tamm (DE); UNLAND, Stefan, D-7141 Schwieberdingen (DE); PHILIPP, Matthias, D-7000 Stuttgart 40 (DE); TORNO, Oskar, D-7141 Schwieberdingen (DE); ROTHHAAR, Ulrich, D-7000 Stuttgart 50 (DE)
(86) Internationale Anmeldenummer: DE9100028
(87) Internationale Veröffentlichungsnummer: WO9111602

(56) Entgegenhaltungen:
- WO-A-87/05971
- WO-A-90/02871
- DE-A- 2 658 614
- DE-A- 3 506 114
- GB-A- 2 130 760
- PATENT ABSTRACTS OF JAPAN, vol. 3, no. 158 (M-86) 25 December 1979, & JP-A-54 137524 (HINO JIDOSHA KOGYO K.K.) 25 December 1979

## Beschreibung

Die Erfindung betrifft ein Verfahren zum Erkennen des jeweiligen Arbeitstaktes der Zylinder eines Viertaktmotors. Die vier Takte eines solchen Motors werden im folgenden als Ansaugtakt, Verdichtungstakt, Verbrennungstakt und Ausstoßtakt bezeichnet. Bei elektronischen Steuerungsvorgängen ist es für verschiedene Signale von Bedeutung, den Arbeitstakt eines jeden Zylinders genau zu kennen. Z.B. bei elektronischer Zündung mit Einzelfunkenspulen muß genau bekannt sein, wann sich ein Kolben um eine vorgegebene Kurbelwinkeldifferenz vor dem oberen Totpunkt des Verbrennungstaktes befindet.

### Stand der Technik

Zur Zylindererkennung sind insbesondere zwei Verfahren bekannt. Das eine nutzt die Signale von einem Zündverteiler. An einer Zündleitung ist ein Induktivsensor angeordnet, der alle 720° Kurbelwinkel ein Signal ausgibt, da alle 720° Kurbelwinkel ein Zündsignal an den jeweiligen Zylinder gegeben wird. Dem Auftreten dieses Sensorsignals ist der Arbeitstakt des überwachten Zylinders genau zugeordnet. Ist der Arbeitstakt dieses einen Zylinders bekannt, liegt auch fest, in welchem jeweiligen Arbeitstakt sich die anderen Zylinder befinden.

Das andere weitverbreitete Verfahren, das beispielsweise aus der EP 0 058 562 bekannt ist, nutzt Signale von einem Nockenwellensensor. Die Nockenwelle dreht sich bei zwei Umdrehungen der Kurbelwelle nur einmal, so daß nach jeweils 720° Umdrehung der Kurbelwelle jeweils ein Sensorsignal ausgegeben wird. Aufgrund der Motorkonstruktion sind dem Auftreten dieses Sensorsignals die Arbeitstakte der einzelnen Zylinder genau zugeordnet.

In der Automobilelektronik besteht grundsätzlich der Wunsch, eine gewünschte Informationsmenge mit so wenig Sensoren wie möglich zu erhalten. Demgemäß bestehen seit langem Bemühungen, die Arbeitstakterkennung bei Viertaktmotoren so auszubilden, daß hierzu keine besonderen Sensoren erforderlich sind, wie der genannte Induktivsensor an einer Zündleitung oder der Nockenwellensensor.

Aus der WO 87/05 971 ist ein Verfahren zur Erkennung des Arbeitstaktes eines Zylinders einer Brennkraftmaschine bekannt, bei dem eine im Arbeitstakt modulierte Größe, beispielsweise Drehzahl oder Druck im Verbrennungsraum mit dem Signal eines Kurbelwellensensors, der einen Referenzimpuls pro Umdrehung erzeugt, in Bezug gesetzt wird. Das Auftreten eines Referenzimpulses und eines Maximums des modulierten Signals erlaubt bei einer Brennkraftmaschine mit ungerader Zylinderzahl eine eindeutige Arbeitstakterkennung.

Das bekannte Verfahren hat jedoch den Nachteil, daß es bei einer geraden Zylinderzahl nicht verwendet werden kann.

Zur Beobachtung der Verbrennung in den Zylindern einer Brennkraftmaschine werden heute teilweise optische Sensoren oder Rußsensoren zur Analyse der Verbrennungsvorgänge eingesetzt, eine solche Vorgehensweise wird beispielsweise in "16th ISATA Proceedings Volume 1, 15.5.1987, Seite 437 bis 441 beschrieben. Mit diesen Sensoren wird dabei automatisch auch der Beginn der Verbrennung in einem Zylinder registriert, wenn das Sensorsignal einen Schwellwert überschreitet. Eine direkte Arbeitstakterkennung findet dabei nicht statt.

Aus der DE-A-35 06 114 ist eine Einrichtung bekannt, bei der zum Erkennen von Ein- und Auslaßventilgeräuschen das Ausgangssignal eines an einer geeigneten Stelle einer Brennkraftmaschine befestigten Klopfsensors untersucht wird. Eine zylinderspezifische Arbeitstakterkennung wird jedoch nicht durchgeführt.

### Aufgabe der Erfindung

Die Aufgabe der Erfindung besteht darin, das aus der Druckschrift
WO-A-87/05 971 bekannte Verfahren zur Erkennung des Arbeitstaktes der Zylinder eines Motors so weiterzubilden, daß ein einfaches und zuverlässiges Verfahren zur Erkennung des Arbeitstaktes eines Motors erhalten wird, bei dem Klopfsensoren vorgesehen sind.

Gelöst wird diese Aufgabe durch die in den nebengeordneten Ansprüchen 1 und 2 angegebenen Verfahren zum Erkennen des jeweiligen Arbeitstaktes der Zylinder eines Motors.

### Darstellung der Erfindung

Beim erfindungsgemäßen Verfahren zum Erkennen des jeweiligen Arbeitstaktes der Zylinder eines Viertaktmotors wird das Signal von mindestens einem Klopfsensor erfaßt und aus dem Pegel des Signales wird auf den Arbeitstakt des überwachten Zylinders und damit auch der anderen Zylinder geschlossen. Die Klopfsensoren messen Körperschallschwingungen des Motorblocks, um aus übermäßig großen Signalen innerhalb einem vorgegebenen Kurbelwinkelbereich auf klopfende Verbrennungen zu schließen. Wenigstens ein solcher Sensor wird eingesetzt und ist einem Zylinder zugeordnet.

Es ist weiterhin auch möglich, jedem Zylinder einen eigenen Klopfsensor zuzuordnen und den Arbeitstakt eines und damit auch der anderen Zylinder dann zu erkennen, wenn das Ausgangssignal des betreffenden Zylinders einen Schwellenwert überschreitet. Es ist dann der Arbeits- bzw. Gaswechseltakt dieses Zylinders bekannt.

Das Signal der Klopfsensoren wird vorteilhafterweise über einen jeweiligen Kurbelwinkelbereich ausgewertet, von dem bekannt ist, daß in ihm der überwachende Motor besonders starke Geräusche liefert, die auch dann auftreten, wenn der Motor nicht klopft. Es handelt sich hierbei um Geräusche, wie sie insbesondere auftreten, wenn ein Nocken auf einen Ventilteller schlägt, wenn ein Ventil auf seinen Sitz schlägt oder wenn ein Kolben kippt. Alle drei eben genannten Geräuschearten treten in einem Bereich um den oberen Totpunkt eines Kolbens zwischen dem Ende des Ausstoßtaktes und dem Beginn des Ansaugtaktes auf.

Überschreiten die Geräusche von einem vorgegebenen Zylinder einen Schwellenwert, ist bekannt, daß dieser Zylinder gerade denjenigen Kurbelwinkelbereich durchlief, in dem die besonders starken Geräusche auftreten. Damit ist der Arbeits- bzw. Gaswechseltakt dieses Zylinders bekannt.

### Zeichnung

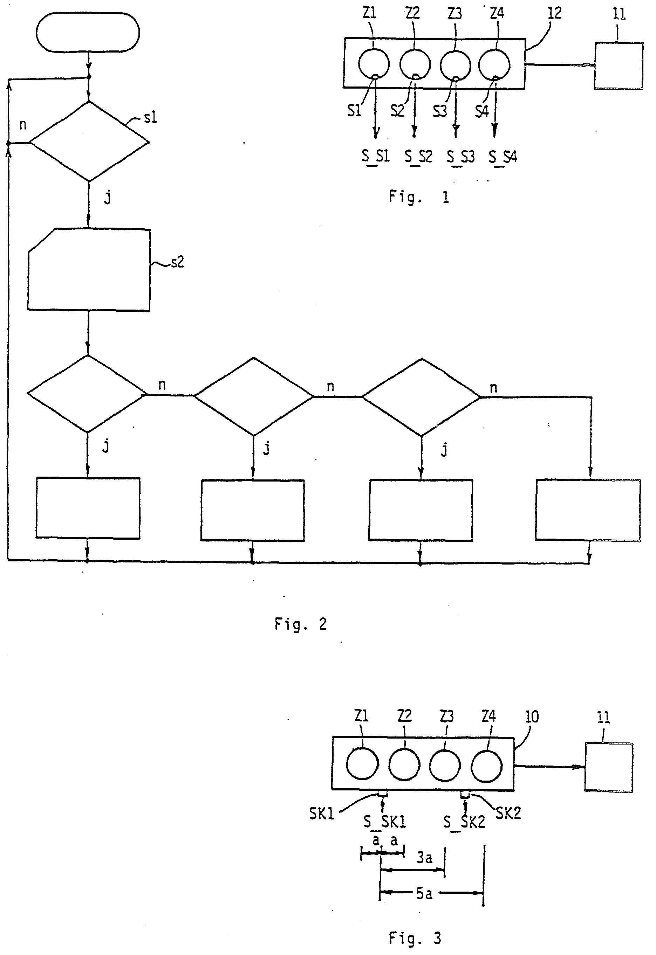

Die Erfindung wird im folgenden anhand von durch Figuren veranschaulichten Ausführungsbeispielen erläutert, wobei die Anordnungen gemäß den Figuren 1, 3 und 4 bereits bekannt sind und die Ausführungsformen mit Drucksensoren lediglich zur allgemeinen Erläuterung von Vorgängen bei Brennkraftmaschinen dienen.
Figur 1 zeigt eine schematische Darstellung eines Motorblocks mit vier Zylindern mit jeweils einem Drucksensor pro Zylinder und mit einem Kurbelwinkelsensor;
Figur 2 ein Flußdiagramm zum Erläutern eines Verfahrensablaufs, bei dem die Signale von Verbrennungsablaufsensoren zur Arbeitstakterkennung verwendet werden, wobei die Verbrennungsablaufsensoren Drucksensoren sind, eine Arbeitstakterkennung, bei der Drucksensorsignale ausgewertet werden, ist nicht Teil der Erfindung;
Figur 3 zeigt eine Darstellung entsprechend der von Figur 1, jedoch mit zwei Klopfsensoren statt mit vier Drucksensoren;
Figur 4 zeigt ein Blockschaltbild einer Schaltung zum Auswerten der Signale von Klopfsensoren. Weiterhin zeigen:
Figur 5 ein Flußdiagramm zum Erläutern eines Verfahrens, das Signale von Klopfsensoren zum Erkennen der Arbeitstakte von Zylindern verwendet.
Figur 6 eine schematische Darstellung eines Motorblocks mit vier Zylindern mit jeweils einem Klopfsensor pro Zylinder und mit einem Kurbelwellensensor, zusätzlich sind die Verbindungen zwischen den Klopfsensoren und dem Steuergerät dargestellt.
Figur 7 ein Flußdiagramm entsprechend Figur 2, mit Klopfsensoren als Verbrennungsablaufsensoren.

Die Anordnungen gemäß den Figuren 1, 3 und 4 sind bereits bekannt. Die Takterkennung mittels Klopfsensoren stellt die Erfindung dar.

### Beschreibung

In Figur 1 ist eine bekannte Darstellung eines Motorblocks 10 dargestellt, wobei die vier Zylinder mit Z1 - Z4 bezeichnet sind. In jedem Zylinder ist ein Drucksensor angeordnet. Diese sind mit S1 - S4 bezeichnet. Sie geben Signale S_1 - S_4 aus. Jedes Signal erreicht etwa um OT des jeweiligen Zylinders ein Maximum. Wann die jeweiligen Kurbelwinkel erreicht sind, ist durch einen Kurbelwinkelsensor 11 erfaßbar.

In dem durch Figur 2 veranschaulichten Verfahren wird eine Arbeitstakterkennung mittels Auswertung von Signalen von Zylinderdrucksensoren beschrieben. Eine solche Arbeitstakterkennung ist nicht Bestandteil der Erfindung, sondern dient lediglich zur Erläuterung. Es wird dabei in einem Schritt s1 so lange überprüft, ob der Kurbelwinkel einen von zwei vorgegebenen Werten erreicht hat, bis dies der Fall ist. Die zwei vorgegebenen Werte sind solche Kurbelwinkelwerte, bei denen für jeweils zwei der Zylinder maximaler Verbrennungsdruck in Frage kommt, z. B. für die Zylinder Z1 und Z4, bei einer Zündfolge Z1-Z3-Z4-Z2. In einem anschließenden Schritt s2 werden die vier Signale S_1 - S_4 erfaßt und in anschließenden Schritten wird überprüft, welches der vier Signale einen vorgegebenen Schwellenwert überschritten hat. Dasjenige Signal, das über dem Schwellenwert liegt, zeigt an, daß der zugehörige Zylinder sich im Verbrennungstakt befindet. Damit liegen auch die Arbeitstakte der anderen Zylinder fest.

Das Verfahren gemäß Figur 2 kann leicht auf verschiedene Arten abgewandelt werden. So müssen in Schritt s2 nicht alle vier Signale erfaßt werden, sondern es reicht aus, diejenigen zwei Signale zu erfassen, für die aufgrund des Kurbelwinkels die Möglichkeit des Überschreitens des Schwellenwertes besteht. Es seien dies z. B. die Signale S_2 und S_3. Es können dann beide Signale auf ein Überschreiten des Schwellenwertes hin überprüft werden. Es reicht jedoch auch aus, nur das eine Signal zu überprüfen, z. B. das Signal S_2. Überschreitet dies den Schwellenwert, liegt fest, daß sich der Zylinder Z2 im Verbrennungstakt befindet. Bleibt es unter dem Schwellenwert, liegt fest, daß Zylinder S3 im Verbrennungstakt ist.

Die bisher genannten Varianten ermöglichen eine Arbeitstakterkennung alle 180° Kurbelwinkel. Werden Meßwerte nur bei einem einzigen vorgegebenen Kurbelwinkel erfaßt, ist eine Arbeitstakterkennung alle 360° Kurbelwinkel möglich. Wird das Signal nur von einem einzigen Drucksensor verwendet, ergibt sich eine Erkennungsmöglichkeit alle 720° Kurbelwinkel.

Bei dem durch Figur 2 veranschaulichten Beispiel einer Arbeitstakterkennung werden die Signale von den Drucksensoren S1 - S4 lediglich mit einem Schwellenwert verglichen. Wird stattdessen der Verlauf mindestens eines der Signale über einen jeweils vorgegebenen Kurbelwinkelbereich ausgewertet, ist eine Arbeitstakterkennung bereits nach weniger als 180° Kurbelwellenumdrehung möglich.

Die bisher erläuterten Beispiele einer Arbeitstakterkennung durch Auswertung von Zylinderdrucksignalen sind nicht Bestandteil der Erfindung. Ausführungsbeispiele der Erfindung sind in den Figuren 3 bis 7 dargestellt, bei ihnen werden Signale von Klopfsensoren anstatt von Drucksensoren ausgewertet.

Figur 3 stellt wiederum einen Zylinderblock 10 mit vier in Reihe angeordneten Zylindern Z1 - Z4 dar. Zwischen den Zylindern Z1 und Z2 ist ein erster Klopfsensor SK1 am Motorblock 10 angeordnet, während zwischen den Zylindern Z3 und Z4 ein zweiter Klopfsensor SK2 angeordnet ist. Der Abstand in Motorlängserstreckungsrichtung zwischen dem ersten Klopfsensor SK1 und dem ersten Zylinder Z1 ist mit a bezeichnet. Der Abstand zum Zylinder Z4 ist dann 5a. Zum Zylinder Z2 besteht ebenfalls der Abstand a, und zum Zylinder Z3 der Abstand 3a. Bei einer Zündfolge Z1-Z3-Z4-Z2 mögen sich die Kolben der Zylinder Z1 und Z4 bei einem Kurbelwinkel von 0° im oberen Totpunkt befinden. Dann befinden sich die Kolben der Zylinder Z2 und Z3 bei einem Kurbelwinkel von 180° im oberen Totpunkt. Zwei Zylinder im oberen Totpunkt laufen jedoch in unterschiedlichen Arbeitstakten, weswegen die Kenntnis des Kurbelwinkels allein nicht ausreicht, den Arbeitstakt festzulegen.

Es sei angenommen, daß ein Motor vorliegt, bei dem jeder Zylinder im Bereich des oberen Totpunkts beim Übergang vom Ausstoßtakt zum Ansaugtakt besonders starke Geräusche erzeugt, nämlich durch das Aufschlagen des Nockens auf den Stößel des Öffnungsventils, durch das Kippen des Kolbens beim Durchlaufen des oberen Totpunkts und schließlich durch das Aufschlagen des Tellers des Auslaßventils auf seinen Sitz. Dieser Taktzeitraum wird im folgenden als Überschneidungstakt bezeichnet. Durchläuft der Zylinder 1 seinen Überschneidungstakt, werden die dabei erzeugten Geräusche vom ersten Klopfsensor SK1 erheblich stärker erfaßt, als wenn die entsprechenden Geräusche vom Zylinder Z4 abgegeben werden. Die Schallintensität nimmt etwa mit dem Quadrat der Entfernung der Zylinder vom Klopfsensor ab, so daß die Intensitäten etwa im Verhältnis von 25:1 zueinander stehen. Für die Signale von den Zylindern Z2 und Z3 gilt etwa das Verhältnis 9:1. Eine besonders sichere Arbeitstakterkennung ist also möglich, wenn Signale bei einem Kurbelwinkel erfaßt werden, in dem die Kolben der Zylinder Z1 und Z4 jeweils im oberen Totpunkt stehen. Werden starke Geräusche vom Klopfsensor SK1 gemessen, ist dies das Zeichen dafür, daß Zylinder Z1 im Überschneidungstakt lief. Andernfalls lief Zylinder Z4 im Überschneidungstakt. Zum Erfassen des Kurbelwinkels ist wiederum ein Kurbelwinkelsensor 11 vorhanden.

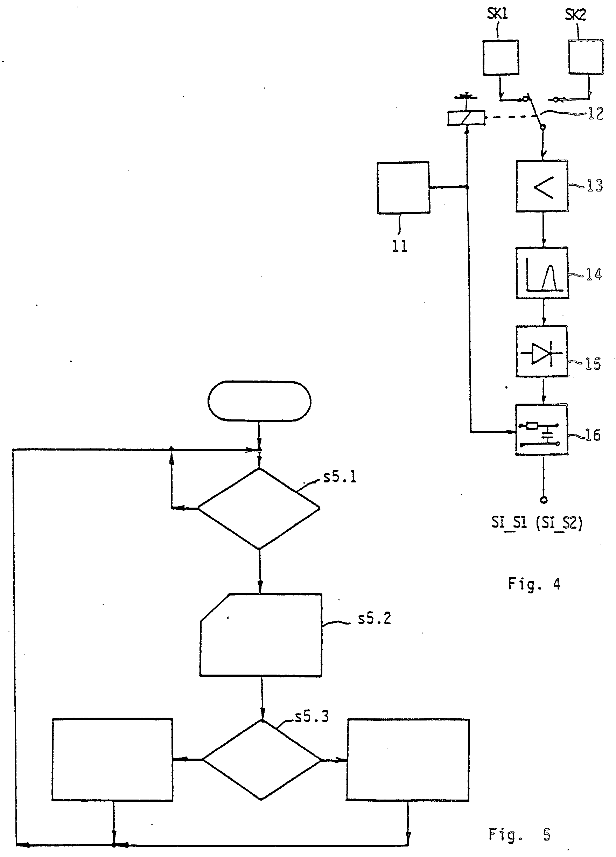

Wie bereits erläutert, treten besonders starke Motorgeräusche in der Regel innerhalb einem vorgegebenen Kurbelwinkelbereich auf. Es empfiehlt sich daher, Signale von den Klopfsensoren nicht nur jeweils bei einem einzigen vorgegebenen Kurbelwinkel zu erfassen, sondern integrierte Signale zu verwenden. Zum Integrieren der Signale von Klopfsensoren wird in der Regel eine Schaltung verwendet, wie sie durch Fig. 4 veranschaulicht ist. Gemäß ihr werden die Signale von den zwei Klopfsensoren SK1 und SK2 wahlweise über einen Umschalter 12 auf einen Verstärker 13, einen folgenden Bandpaß 14, einen Gleichrichter 15 und einen Analogintegrator 16 geschickt. Der Umschalter 12 wird mit Hilfe eines Signals vom Kurbelwellensensor 11 umgeschaltet. Das Signal setzt mit jedem Umschalten auch den Integrator 16 zurück. Am Ausgang des Integrators 16 steht jeweils einige Zeit nach seinem Rücksetzen ein Integrationssignal SI_S1 oder SI_S2 an, je nachdem auf welchen Klopfsensor gerade geschaltet ist.

Ein mit Hilfe der Anordnungen gemäß den Fig. 3 und 4 ausführbares Verfahren ist durch das Flußdiagramm von Fig. 5 veranschaulicht. In einem Schritt s5.1 wird überprüft, ob der Kurbelwinkel einen vorgegebenen Wert nach dem oberen Totpunkt der Zylinder Z1 und Z4 erreicht hat. Ist dies der Fall, wird in einem Schritt s5.2 der Integrationswert SI_S1 vom ersten Klopfsensor SK1 erfaßt. Der erfaßte Wert wird mit einem Schwellenwert S_TH verglichen (Schritt s5.3). Wird der Schwellenwert überschritten, zeigt dies an, daß sich Zylinder Z1 im Ansaugtakt befindet. Andernfalls befindet sich Zylinder Z4 im Ansaugtakt.

Bei dem durch Fig. 5 veranschaulichten Verfahren wird nur das Signal vom ersten Klopfsensor SK1 ausgenutzt. Wie durch Fig. 4 veranschaulicht, steht aber auch das Signal SI_S2 vom zweiten Klopfsensor SK2 zur Verfügung. Dieses. Signal kann ausgenutzt werden, um das Meßergebnis weiter abzusichern. Als Bedgingung zur Arbeitstakterkennung reicht es dann nicht aus, daß das Signal vom einen Klopfsensor einen Schwellenwert überschreitet, sondern es muß die zusätzliche Bedingung erfüllt sein, daß das Signal vom anderen Klopfsensor unter dem Schwellenwert bleibt. Übersteigen beide Signale den Schwellenwert oder bleiben beide unter demselben, wird der Erkennungsversuch als erfolglos verworfen.

Wird nur bei einem vorgegebenen Kurbelwinkel gemessen, ist eine Zylindererkennung alle 360° möglich. Werden die Meßwerte von mindestens einem der beiden Klopfsensoren dagegen alle 180° Kurbelwinkel erfaßt, ist auch eine Arbeitstakterkennung alle 180° möglich. Es muß dann allerdings zwischen den Signalen von den Zylindern Z2 und Z3 unterschieden werden, welche Signale sich in ihrer Stärke weniger voneinander unterscheiden als die Signale von den Zylindern Z1 und Z4, weswegen diese Erfassung störanfälliger ist.

In allen Fällen der Auswertung der Signale von Klopfsensoren empfiehlt es sich stark, solche Motorgeräusche auszuwerten, die in einem anderen Winkelbereich anfallen als in demjenigen Winkelbereich, in dem Klopfen auftreten kann, um die Arbeitstakterkennung nicht durch eventuell auftretende Klopfsignale zu verfälschen.

Zur Klopferkennung wird der Umschalter 12 der Schaltung gemäß Figur 4 herkömmlicherweise so betätigt, daß jeweils das signal von demjenigen Klopfsensor erfaßt wird, der am nächsten bei demjenigen Zylinder liegt, in dem gerade Klopfen auftreten kann. Bei einer Zündfolge Z1-Z3-Z4-Z2 ist die schaltfolge somit SK1-SK2-SK2-SK1. Soll im startfall eines Motors eine Zylindererkennung möglichst schnell, sicher und einfach ausgeführt werden, empfiehlt es sich, von dieser Umschaltfolge abzuweichen, nämlich wiederholt auf nur einen der beiden Klopfsensoren so lange zu schalten, bis die Takterkennung erfolgreich abgelaufen ist. Weswegen dies zweckmäßig ist, geht aus dem anhand von Figur 5 erläuterten Verfahrensablauf hervor.

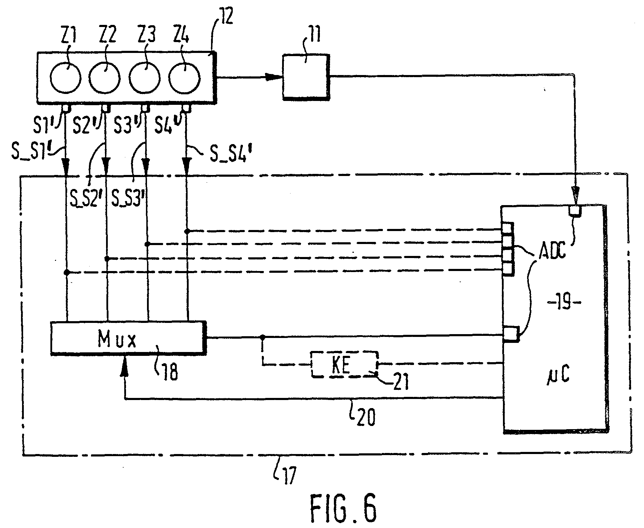

In Fig. 6 ist entsprechend der Darstellung in Fig. 1 ein Motorblock 10 schematisch dargestellt, den vier Zylindern Z1 - Z4 ist je ein Klopfsensor S1' - S4' zugeordnet. Die Klopfsensoren S1' - S4' liefern signale s_s1' - s_s4' die jeweils einem Zylinder zugeordnet werden können und dann maximal sind, wenn der betreffende Zylinder im Bereich des oberen Totpunktes beim Übergang vom Ausstoßtakt zum Ansaugtakt besonders starke Geräusche erzeugt.

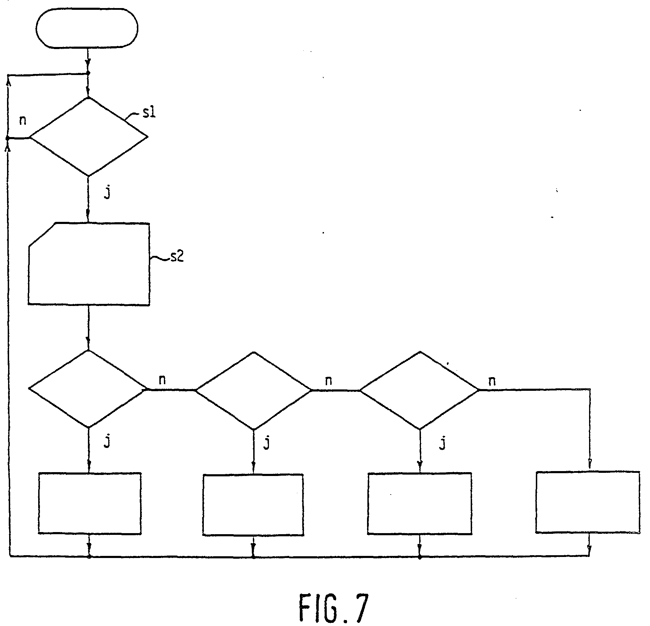

Entsprechend der Vorgehensweise nach Fig. 2 wird bei dem in Fig 7 dargestellten Verfahren, das daher hier nicht weiter erläutert werden soll, aus dem Überschreiten eines vorgebbaren schwellenwertes der Arbeitstakt, in dem sich der jeweilige Zylinder befindet, erkannt, im Unterschied zum Verfahren nach Fig. 2, das sich auf die Auswertung von Drucksensorsignalen bezieht, wird bei der Auswertung von Klopfsensorsignalen aus dem Überschreiten des Schwellenwertes erkannt, daß sich der betreffende Zylinder im Ansaugtakt befindet.

Bei der in Fig. 6 abgebildeten Anordnung ist mit 17 eine mögliche Ausgestaltung der Auswerteschaltung dargestellt, die im übrigen in entsprechender Weise auch für die Anordnungen nach Fig. 1 oder 4 verwendbar ist.

Die Auswerteschaltung 17 umfaßt einen Multiplexer 18 sowie einen µC 19, der beispielsweise Bestandteil eines nicht dargestellten steuergerätes ist.

Die Klopfsensoren S1' - S4' sind entweder über je eine Leitung mit dem Multiplexer 18 verbunden und über diesen mit einer weiteren Leitung mit dem Analog/Digital-Converter ADC des µC 19, sie können aber auch direkt über vier ADC mit dem uC 19 vebunden sein.

Im ersten Fall findet eine Verarbeitung im Multiplexbetrieb statt, im zweiten Fall werden die Signale im Parallelbetrieb abgearbeitet. Die Steuerung des Multiplexers 18 mit Hilfe des µC 19 erfolgt über die Leitung 20.

Für die normale Klopferkennung ist eine Anordnung 21 vorgesehen, in der diese Klopferkennung in üblicher Weise erfolgt.

Die bei der Beschreibung der Auswertung der Klopfsignale entsprechend der Anordnung nach Fig. 3 angegebenen Vorgehensweisen wie Integration der signale und Vergleich des Integralwertes mit einem Schwellenwert lassen sich selbstverständlich auch mit der Anordnung nach Fig. 6 realisieren.

Die Ausführungsbeispiele betreffen die Arbeitstakterkennung bei einem Vierzylinder-Viertaktmotor. Bei einem Motor mit mehr als vier Zylindern laufen die Verfahren entsprechend ab. Bei Motoren ab sechs Zylindern lassen sich Zylindergeräusche sehr sicher einzelnen Zylindern zuordnen, da derartige Motoren in der Regel über zwei Zylinderbänke verfügen und sich in jeder Bank immer jeweils nur ein Kolben im oberen Totpunkt befindet.

Die erläuterten Verfahren veranschaulichen, wie Verbrennungsablauf-Sensoren einer zusätzlichen Nutzung zugeführt werden können, nämlich derjenigen des Erkennens des jeweiligen Arbeitstaktes eines Zylinders. Je mehr Signale von einzelnen Sensoren ausgenutzt werden, desto schneller und/oder sicherer kann eine Arbeitstakterkennung erfolgen. Dies ist insbesondere beim Starten eines Motors von Vorteil.

## Patentansprüche

1. Verfahren zum Erkennen des jeweiligen Arbeitstaktes der Zylinder eines Viertaktmotors, bei dem Sensorsignale verarbeitet werden, wobei das Sensorsignal von mindestens einem Verbrennungsablauf-Sensor bei vorgebbaren Kurbelwellenwinkeln erfaßt wird und aus dem Pegel dieses Signales auf den Arbeitstakt des betreffenden Zylinders und damit auch der anderen Zylinder geschlossen wird, wobei der mindestens eine Verbrennungsablauf-Sensor ein einem Zylinder zugeordneter Klopfsensor ist und die Sensorsignale mit einem Schwellenwert verglichen werden, dadurch gekennzeichnet, daß die Höhe des Schwellenwertes so gewählt wird, daß eine Schwellenwertüberschreitung nur während einer Phase mit hoher Geräuschintensität aufgrund des Öffnens des Einlaßventils und des Schließens des Auslaßventils erfolgt und immer dann, wenn der Schwellenwert von einem Sensorsignal überschritten wird, daraus geschlossen wird, daß sich der betreffende Zylinder in seinem Ansaugtakt befindet.

2. Verfahren zum Erkennen des jeweiligen Arbeitstaktes der Zylinder eines Viertaktmotors, bei dem Sensorsignale verarbeitet werden, wobei die Sensorsignale von mindestens zwei Verbrennungsablauf-Sensoren bei vorgebbaren Kurbelwellenwinkeln erfaßt werden und die Verbrennungsablauf-Sensoren Klopfsensoren sind, die an unterschiedlichen Stellen des Motorblocks angeordnet sind, so daß die aufgrund des Öffnens des Einlaßventils und des Schließens des Auslaßventils auftretenden Geräusche für jeden einzelnen Zylinder unterschiedlich stark empfangen und die Sensorsignale mit einem Schwellenwert verglichen werden, dessen Höhe so gewählt wird, daß eine Schwellenwertüberschreitung nur während einer Phase mit hoher Geräuschintensität erfolgt, wobei immer dann, wenn der Schwellenwert von einem Sensorsignal überschritten wird und von dem wenigstens einen anderen nicht, daraus geschlossen wird, daß sich der betreffende Zylinder in seinem Ansaugtakt befindet.

3. Verfahren nach Anspruch 1 oder 2, dadurch gekennzeichnet, daß der vorgebbare Kurbelwellenwinkel sich über einen Kurbelwellenwinkelbereich erstreckt, in dem jeweils ein Kolben in der Nähe seines oberen Totpunktes ist.

4. Verfahren nach Anspruch 1, 2 oder 3, dadurch gekennzeichnet, daß die Signale der Klopfsensoren aufintegriert werden und der Integralwert mit einem Schwellenwert verglichen wird.

5. Verfahren nach Anspruch 4, dadurch gekennzeichnet, daß nur Signal des Klopfsensors erfaßt wird, der am nächsten bei demjenigen Zylinder liegt, in dem Klopfen auftreten kann, und aufeinanderfolgende Integralwerte ausgewertet werden.

6. verfahren nach einem der vorhergehenden Ansprüche, dadurch gekennzeichnet, daß die Signale der einzelnen Sensoren einer Auswerteschaltung zugeführt werden, wobei die Zuführung entweder über eine Leitung im Multiplexbetrieb oder über mehrere Leitungen im Parallelbetrieb erfolgt.

## Claims

1. Method for detecting the respective operating stroke of the cylinders of a four-stroke engine, in which sensor signals are processed, the sensor signal of at least one combustion-process sensor being recorded at predeterminable crankshaft angles and the operating stroke of the relevant cylinder and thus also of the other cylinders being inferred from the level of this signal, the combustion-process sensor, of which there is at least one, being a knock sensor assigned to one cylinder, and the sensor signals being compared with a threshold value, characterized in that the level of the threshold value is chosen such that the threshold value is exceeded only during a phase of high noise intensity due to the opening of the inlet valve and the closing of the exhaust valve, and, whenever the threshold value is exceeded by a sensor signal, it is concluded from this that the relevant cylinder is in its intake stroke.

2. Method for detecting the respective operating stroke of the cylinders of a four-stroke engine, in which sensor signals are processed, the sensor signals of at least two combustion-process sensors being recorded at predeterminable crankshaft angles, and the combustion-process sensors being knock sensors which are arranged at different locations on the engine block, with the result that the noises which arise due to the opening of the inlet valve and the closing of the exhaust valve are received with different intensities in the case of each individual cylinder and the sensor signals are compared with a threshold value, the level of which is chosen such that the threshold value is exceeded only during a phase of high noise intensity, it being concluded that the relevant cylinder is in its intake stroke whenever the threshold value is exceeded by one sensor signal and not by the other or others.

3. Method according to Claim 1 or 2, characterized in that the predeterminable crankshaft angle extends over a crankshaft angle range in which one piston in each case is in the vicinity of its top dead centre.

4. Method according to Claim 1, 2 or 3, characterized in that the signals of the knock sensors are integrated and the integral value is compared with a threshold value.

5. Method according to Claim 4, characterized in that only the signal of the knock sensor is recorded which is closest to the cylinder in which knocking can occur, and successive integral values are evaluated.

6. Method according to one of the preceding claims, characterized in that the signals of the individual sensors are fed to an evaluation circuit, the signals being fed either via one line in multiplex mode or via a plurality of lines in parallel mode.

## Revendications

1. Procédé de détection du temps actif respectif d'un cylindre d'un moteur à quatre temps traitant les signaux de capteur selon lequel,
le signal d'au moins un capteur de déroulement de combustion est détecté pour des angles prédéterminés du vilebrequin et à partir du niveau de ce signal on déduit le temps actif du cylindre concerné et ainsi celui des autres cylindres,
au moins un capteur de déroulement de combustion étant un capteur de cliquetis associé à un cylindre et les signaux de capteurs sont comparés à un seuil,
caractérisé en ce que
l'amplitude du seuil est choisie pour qu'il n'y ait dépassement du seuil que pendant une phase à bruits intenses du fait de l'ouverture de la soupape d'admission et de la fermeture de la soupape d'échappement et toujours si le seuil est dépassé par un signal de capteur on en déduit que le cylindre concerné est dans le temps d'aspiration.

2. Procédé de détection du temps actif respectif du cylindre d'un moteur à quatre temps traitant des signaux de capteurs, selon lequel,
les signaux de capteurs d'au moins deux capteurs de combustion sont détectés pour des angles de vilebrequin prédéterminés et les capteurs de déroulement de combustion sont des capteurs de cliquetis prévus à des endroits différents du bloc moteur pour recevoir avec une intensité différente les bruits engendrés par l'ouverture de la soupape d'admission et la fermeture de la soupape d'échappement de chaque cylindre, et les signaux de capteurs sont comparés à un seuil dont l'amplitude est choisie pour que le seuil ne soit dépassé que pendant une phase à forte intensité de bruits, et toujours lorsqu'un signal de capteur dépasse le seuil et que l'autre ne le dépasse pas, on en déduit que le cylindre concerné est dans son temps d'aspiration.

3. Procédé selon la revendication 1 ou 2,
caractérisé en ce que
l'angle de vilebrequin prédéterminé correspond à une plage d'angle de vilebrequin pour laquelle le piston est à proximité de son point mort haut.

4. Procédé selon les revendications 1, 2, 3,
caractérisé en ce que
l'on intègre les signaux des capteurs de pression et on compare la valeur de l'intégral à un seuil.

5. Procédé selon la revendication 4,
caractérisé en ce que
l'on ne détecte que le signal du capteur de pression le plus proche du cylindre dans lequel peut se produire le cliquetis et on exploite les intégrales qui en résultent.

6. Procédé selon l'une des revendications précédentes,
caractérisé en ce que
l'on applique les signaux des différents capteurs à un circuit d'exploitation, la transmission se faisant soit par une ligne en mode multiplexé, soit par plusieurs lignes en mode parallèle.
